# EUROPÄISCHE PATENTSCHRIFT

(11) **EP 1 119 574 B1**
(45) Veröffentlichungstag und Bekanntmachung des Hinweises auf die Patenterteilung: **22.01.2003**
(21) Anmeldenummer: 99970392.9
(22) Anmeldetag: 23.09.1999
(51) Int. Cl.: C07F 15/00, C07F 9/6568

(54) **SUBSTITUIERTE ISOPHOSPHINDOLINE UND IHRE VERWENDUNG**
SUBSTITUTED ISOPHOSPHINDOLINES AND THEIR USE
ISOPHOSPHINDOLINES SUBSTITUEES ET LEUR UTILISATION

(30) Priorität: 09.10.1998 DE 19846559
(43) Veröffentlichungstag der Anmeldung: 01.08.2001
(73) Patentinhaber: Degussa AG, 40474 Düsseldorf (DE)
(72) Erfinder: HAACK, Karl-Josef, D-65527 Niedernhausen (DE); RIERMEIER, Thomas, D-65931 Franfurt (DE); ZAPF, Alexander, D-83024 Rosenheim (DE); BELLER, Matthias, D-18119 Rostock (DE); BOSCH, Boris, E., D-60487 Frankfurt (DE); JUNGE, Henrik, D-18147 Rostock (DE)
(74) Vertreter: Ackermann, Joachim, Dr.
(86) Internationale Anmeldenummer: EP9907084
(87) Internationale Veröffentlichungsnummer: WO00021971

(56) Entgegenhaltungen:
- MANN F G ET AL: "Co-ordinated Derivatives of 2-Phenyl-Isophosphindoline" CHEMISTRY AND INDUSTRY, Bd. 77, 27. September 1958 (1958-09-27), XP002900806
- COLLIER J W ET AL: "The Constitution of Complex Metallic Salts. Part XIX.* The 2-Phenylisophosphindoline Derivatives of Platinum(II), Palladium(II), and Nickel(II)" JOURNAL CHEMICAL SOCIETY, Mai 1964 (1964-05), XP002900807 London, GB
- COLLIER J W ET AL: "The Constitution of Complex Metallic Salts. Part XX.1 The Co-ordinated Derivatives of 2-Phenylisophosphindoline with Cobalt, Rhodium, and Iridium Halides" JOURNAL CHEMICAL SOCIETY , Mai 1964 (1964-05), XP002900805 London, GB
- COLLIER J W ET AL: "The Constitution of Complex Metallic Salts. Part XXI.1 The Copper(I), Silver(I), and Gold(I) Derivatives 0f 2-Phenylisophosphindoline " JOURNAL CHEMICAL SOCIETY , Mai 1964 (1964-05), XP002900808 London, GB
- CHUL K M ET AL: "Comparison of Stereochemistry in Racemic and Optically Resolved Forms of a Five-co-ordinate Compound. Crystal and Molecular Structures of Dibromotris-(2-phenylisophosphindoline)pal ladium(II)-Acetone (Orange) and Dibromotris-(2-phenylisophosphindoline)pal ladium(II) (Red)" JOURNAL CHEMICAL SOCIETY, September 1964 (1964-09), XP002900809 London, GB

## Beschreibung

Die Erfindung betrifft substituierte Isophosphindoline und deren Metallkomplexe.

Phosphorverbindungen, insbesondere trisubstituierte Phosphane, haben große Bedeutung als Liganden in der homogenen Katalyse. Durch Variation der Substituenten am Phosphor in solchen Phosphorverbindungen lassen sich die elektronischen und sterischen Eigenschaften des Phosphorliganden gezielt beeinflussen, so daß Selektivität und Aktivität bei homogen-katalytischen Prozessen gesteuert werden können.

Die Strukturvielfalt der bisher bekannten Phosphorliganden ist sehr groß. Die Gliederung dieser Liganden kann beispielsweise nach Stoffklassen erfolgen, und Beispiele für solche Stoffklassen sind Trialkyl- und Triarylphosphane, Phosphite, Phosphonite usw.. Diese Einteilung nach Stoffklassen ist insbesondere nützlich, um die elektronischen Eigenschaften der Liganden zu beschreiben.
Darüber hinaus ist eine Klassifizierung von Phosphorliganden nach ihren Symmetrieeigenschaften oder nach der Zähnigkeit der Liganden möglich. Diese Strukturierung trägt insbesondere der Stabilität, Aktivität und (potentiellen) Stereoselektivität von Metallkomplexen mit Phosphorliganden als Katalysatorvorstufen/Katalysatoren Rechnung.

Enantiomeren-angereicherte chirale Liganden werden in der asymmetrischen Synthese bzw. asymmetrischen Katalyse eingesetzt; hier kommt es wesentlich darauf an, daß die elektronischen *und* die stereochemischen Eigenschaften des Liganden auf das jeweilige Katalyseproblem optimal abgestimmt sind. Es besteht ein großer Bedarf an chiralen Liganden, die sich stereochemisch oder/und elektronisch unterscheiden, um den für eine bestimmte asymmetrische Katalyse optimalen 'maßgeschneiderten' Liganden aufzufinden. Im Idealfall hat man daher ein vielseitig modifizierbares, chirales Ligand-Grundgerüst zur Verfügung, das sich in bezug auf seine sterischen und elektronischen Eigenschaften in breitem Rahmen variieren läßt. Beispiele für ein solches Ligand-Grundgerüst sind die Metallocen-Katalysatoren für die stereoselektive Olefinpolymerisation bzw. für die asymmetrische Katalyse.

Innerhalb der Stoffklasse der cyclischen Phosphane haben die Phospholane eine besondere Bedeutung erreicht. Zweizähnige, chirale Phospholane sind beispielsweise die in der asymmetrischen Katalyse eingesetzten DuPhos- und BPE-Liganden (Burk et al., Specialty Chemicals, 1998, 58). Diese lassen sich zwar sterisch relativ breit, elektronisch jedoch in nur sehr geringem Maß, d. h. durch Ersatz des Arendiyl-Rückgrats in den DuPhos-Liganden durch ein Ethan-1,2-diyl-Rückgrat in den BPE-Liganden, variieren.

Die Stoffklasse der Isophosphindoline der allgemeinen Formel **(I)** ist der der Phospholane recht ähnlich, aber aus der Literatur in Form nur einiger weniger Vertreter bekannt: So kennt man beispielsweise die Stammverbindung Isophosphindolin der Formel **(la)** (Robinson et al., J. Heterocycl. Chem., 1973, 395) sowie Alkyl- oder Aryl-Derivate von Isophosphindolin der Formel **(Ib, Ic)** (Mann et al., J. Chem. Soc., 1954, 2832; Schmidbaur et al., J. Organomet. Chem. 250, 1983, 171; Breen et al., J. Am. Chem. Soc., 1995, 11914), ferner Phosphoniumsalze des Isophosphindolins der allgemeinen Formel **(II)** (Mann et al., J. Chem. Soc., 1954, 2832; ibid. 1958, 2516; Schmidbaur et al., J. Organomet. Chem. 250, 1983, 171).

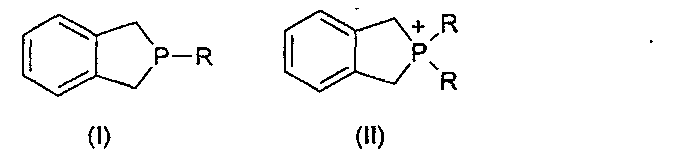

In Formel **(Ia)** stellt R Wasserstoff dar, in den Formeln **(Ib/c)** bzw. **(II)** dagegen ist R ein Alkyl- oder ein Arylrest.

Weiterhin sind zur Formel (I) analoge Isophosphindoline in Chemistry and Industry, Bd. 77, 27. September 1958, Seite 1264 und in Journal Chemical Society, Mai 1964 (1964-05), Seiten 1803-1814, 1815-1819 und 1820-1825 bzw. in Journal Chemical Society, September 1974 (1974-09), Seite 2117-2122 beschrieben und deren Struktur aufgeklärt.

Am aliphatischen Kohlenstoffgerüst des Isophosphindolins substituierte Vertreter sind ebenfalls bekannt, jedoch handelt es sich bei den bislang bekannten Verbindungen entweder um monosubstituierte Derivate der allgemeinen Formel (**III**) (Fluck et al., Phosphorous Sulfur, 1987, 121; Quin et al., J. Org. Chem., 1986, 3235) oder um Derivate der allgemeinen Formel (**IV**), die in WO 96/16100 und WO 96/23829 zwar erwähnt, aber offenbar bislang nicht synthetisiert worden sind.

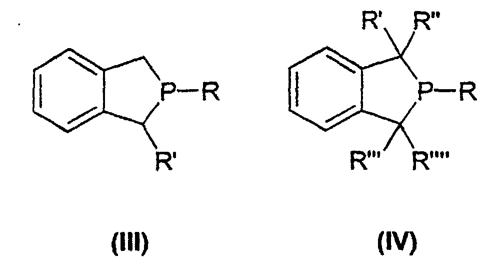

1,3-disubstituierte Isophosphindoline (**V**) sind bisher nur in Form ihrer Phosphanoxide (**VIa, VIb**) bekannt (Holland et al., J. Chem. Soc. Perkin Trans. 1, 1973, 927):

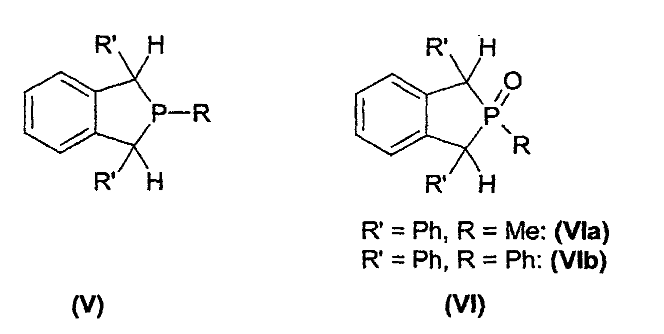

Die bisher noch nicht beschriebenen Derivate der Formel (**V**) des 1,3-disubstituierten Isophosphindolins sind achiral, wenn die beiden stereogenen Zentren an C1 und C3 verschiedene (einander entgegengesetzte) absolute Konfigurationen aufweisen (*meso*-Form). Die übrigen Vertreter sind chiral (*c*₂-symmetrisch). Besondere Bedeutung kommt den chiralen Vetretem zu, da sie als Liganden in asymmetrischen, katalytischen Synthesen eingesetzt werden können.

Ebenso wie die Substanzen der Formel (**V**) bislang unbeschrieben sind, sind es deren am aromatischen Kohlenstoffgerüst substituierte Vertreter.

Die bisher bekannten und verwendeten Phospholanliganden DuPhos und BPE haben, wie oben bereits erwähnt, den Nachteil, daß sie in bezug auf ihre elektronischen Eigenschaften kaum variierbar sind. Es ist daher Aufgabe dieser Erfindung, ein Ligand-Grundgerüst zur Verfügung zu stellen, das dem der bisherigen Phospholanliganden analog, aber darüber hinaus elektronisch in breitem Rahmen variierbar ist.
Diese Aufgabe wird mit der Bereitstellung von substituierten Isophosphindolinen gemäß Formel **(VII)** oder **(XIII)** gelöst, 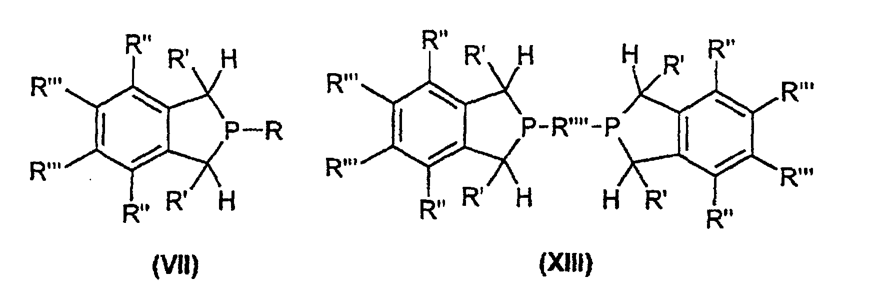 wobei in der allgemeinen Formel **(VII)**
- R: Wasserstoff, Alkyl-, Aryl-, Haloaryl-, Haloalkylgruppen,
- R': Alkyl-, Aryl-, Haloaryl-, Haloalkylgruppen,
- R" und R''': unabhängig voneinander Wasserstoff, Alkyl-, Aryl, Haloalkyl- oder Haloaryl-, Alkoxy-, Amino-, Dialkylamino-, Sulfonatgruppen oder Fluor bedeuten
und wobei zwei benachbarte R"/R", R"/R'" oder R'''/R''' auch verbrückt sein können
oder wobei in der allgemeinen Formel **(XIII)**
- R': Alkyl-, Aryl-, Haloaryl-, Haloalkylgruppen,
- R" und R"': unabhängig voneinander Wasserstoff, Alkyl-, Aryl-, Haloalkyl- oder Haloaryl-, Alkoxy-, Amino-, Dialkylamino-, Sulfonatgruppen oder Fluor bedeuten
und zwei benachbarte R"/R", R''/R''' oder R'''/R''' auch verbrückt sein können und
- R"": eine Alkandiyl-, Arendiyl- oder Heteroarendiylgruppe ist

Der Begriff Alkyl- bzw. Haloalkylgruppe soll dabei die entsprechenden Cycloverbindungen einschließen. Bevorzugt sind insbesondere chirale substituierte Isophosphindoline.

Vorzugsweise weist das erfindungsgemäße substituierte Isophosphindolin Alkyl-, Aryl-, Haloaryl-, Haloalkyl-, Alkoxy- oder/und Dialkylaminogruppen unabhängig voneinander auf, die jeweils 1 bis 20, insbesondere 1 bis 6 Kohlenstoffatome, enthalten.

Die Haloalkyl- oder/und Haloarylgruppen weisen vorzugsweise die allgemeinen Formeln CHal₃, CH₂CHal₃, C₂Hal₅ auf, wobei Hal insbesondere für F, Cl und Br stehen kann. Besonders bevorzugt sind Haloalkyl- oder/und Haloarylgruppen der Formeln CF₃, CH₂CF₃, C₂F₅.

Weiterhin ist bevorzugt, daß die Alkandiyl-, Arendiyl- oder Heteroarendiylgruppe R"" des substituierten Isophosphindolins 2 bis 20 Kohlenstoffatome, vorzugsweise 2, 3, 4, 5 oder 6 Kohlenstoffatome, insbesondere 2 oder 6 Kohlenstoffatome, aufweist. Ethan-1,2-diyl, Benzo-1,2-diyl oder Furan-3,4-diyl sind besonders bevorzugte Gruppen der Alkandiyl-, Arendiyl- oder Heteroarendiylgruppe R"".

Ferner ist ein substituiertes Isophosphindolin bevorzugt, bei dem R Phenyl, R' Methyl oder Ethyl, R" und R"' Wasserstoff, Methyl oder/und Phenylen, R"" Benzo-1,2-diyl ist. Besonders bevorzugt ist ein substituiertes Isophosphindolin, bei dem R Phenyl, R' Methyl oder Ethyl, R" und R"' Wasserstoff, Methyl oder/und Phenylen, R"" Benzo-1,2-diyl ist, bei dem R" und R"' nicht Wasserstoff ist oder bei dem entweder R" oder R"' Wasserstoff ist.

Weiterhin sind substituierte Isophosphindoline bevorzugt, die stereogene Zentren in 1- und 3-Position mit gleichen absoluten Konfigurationen. Bei substituiertem Isophosphindolin gemäß Formel **(VII)** weist dieses zwei stereogene Zentren in den Positionen 1 und 3 mit gleichen absoluten Konfigurationen auf, bei solchen gemäß Formel **(XIII)** weist jenes drei oder vier stereogene Zentren in den Positionen 1, 1', 3 und 3' mit gleichen absoluten Konfigurationen auf.

Schließlich sind substituierte chirale Isophosphindole bevorzugt, bei denen ein Enantiomer angereichert ist.

Die Substituenten R' in den Substanzen der Formeln (**VII**) und (**XIII**) sind dabei wesentlich für die *sterischen* Eigenschaften der Liganden, während die übrigen Substituenten R, R", R"' und R"" durch ihr Donor- bzw. Akzeptorvermögen die *elektronischen* Eigenschaften wesentlich bestimmen und damit, wie oben erläutert, in Katalysereaktionen große Einflußmöglichkeiten auf Reaktivität, Selektivität und Anwendungsbreite bezüglich der Substrate erlauben.

Ein weiterer wesentlicher Unterschied der Verbindungen der Formeln (**VII**) und (**XIII**) im Vergleich zu den Phospholanen ist die größere Rigidität der Fünfringheterocyclen in den Verbindungen der Formeln (**VII**) und (**XIII**), was auf den Ersatz des Ethandiyl-Rückgrats in den Phospholanen durch den Benzen-1,2-diyl-Substituenten in den Substanzen der Formeln (**VII**) und (**XIII**) zurückzuführen ist.

Es wurden Vertreter der Stoffklasse der Formel (**VII**), die neben Verbindungen der Formel **(V)** auch die im annelierten Aromaten substituierten Verbindungen umfaßt, hergestellt. Insofern diese chiral sind, wurden die Verbindungen auch in einer Form synthetisiert, bei der ein Enantiomer angereichert ist.

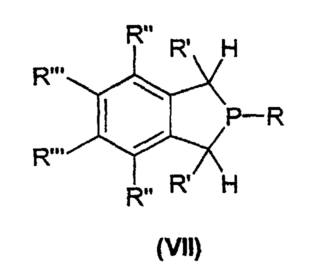

Für die Synthese der Verbindungsklasse der substituierten Isophosphindoline der allgemeinen Formel **(VII)** stehen mehrere Wege zur Verfügung: Man kann beispielsweise entweder vom entsprechenden Phthaldialdehyd der allgemeinen Formel **(VIII)** oder vom entsprechenden Diketon der allgemeinen Formel **(IX)** ausgehen:

Die Reaktion des Phthaldialdehyds der allgemeinen Formel **(VIII)** mit zwei Äquivalenten Grignard R'-M liefert zunächst das entsprechende Dialkoholat der allgemeinen Formel **(X),** das zum cyclischen Sulfat der allgemeinen Formel **(XII)** weiter umgesetzt werden kann.

Ausgehend vom Diketon der allgemeinen Formel (**IX**) erhält man durch Reduktion mittels Borverbindungen oder analogen Verbindungen das Boronsäurederivat (**XI**), das ebenfalls zum cyclischen Sulfat (**XII**) umgesetzt werden kann.

Ein einzelner Vertreter der Sulfate der allgemeinen Formel (**XII**) ist für R' = Methylrest und R" = R"' = H eine bereits bekannte Verbindung und wird in WO 97/13763, dort Seite 7, erwähnt.

Je nach Versuchsbedingungen, Syntheseweg und Reagenz fällt das Sulfat der allgemeinen Formel (**XII**) als Diastereomeren- (*meso-* / *rac*-Form) oder/und Enantiomerengemisch an; die Trennung der Isomeren ergibt das stereochemisch reine Sulfat der allgemeinen Formel (**XII**).

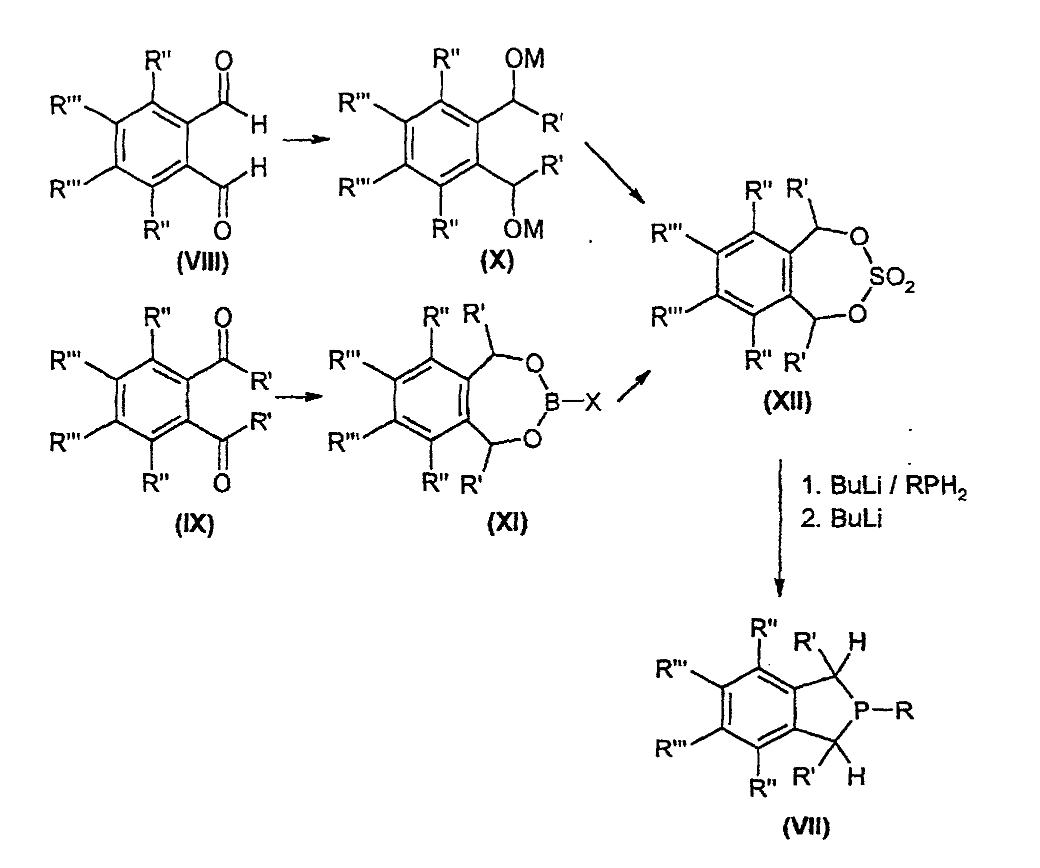

Die Umsetzung des Sulfats der allgemeinen Formel **(XII)** mit Phosphanen der allgemeinen Formel RPH₂ (R = Alkyl, Aryl, Heteroarendiyl) liefert in Abwandlung von bekannten Verfahren (Burk US 5,386,061) über die entsprechenden Phosphide das entsprechende substituierte Isophosphindolin.

Es ist ebenso möglich, das Sulfat der allgemeinen Formel **(XII)** als Isomerengemisch zum entsprechenden Gemisch isomerer Isophosphindoline umzusetzen und im Anschluß daran eine Trennung durchzuführen, um stereochemisch reine substituierte Isophosphindoline zu erhalten. Diese Trennung läßt sich beispielsweise durch fraktionierte Kristallisation und/oder chromatographisch erreichen.

Als Phosphane der allgemeinen Formel RPH₂ sind alle Arten von Aryl- und Alkylphosphanen als Ausgangssubstanzen einsetzbar (R = Aryl, Alkyl). Falls stattdessen Diphosphane der allgemeinen Formel H₂P- R''''-PH₂ verwendet werden, so entstehen Chelatliganden der allgemeinen Formel **(XIII),** die im Falle von *c*₂symmetrischen Sulfaten der allgemeinen Formel **(XII)** zu chiralen und dann ebenfalls *c*₂-symmetrischen Chelatliganden führen.

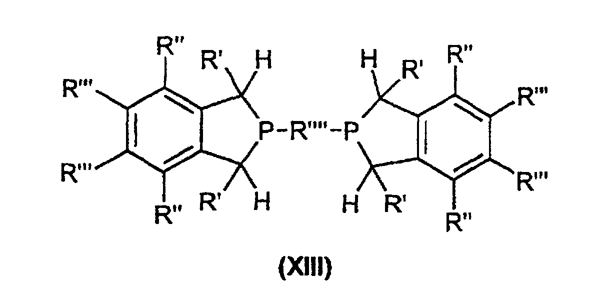

Die Verbindungen der allgemeinen Formeln (**VII**) und (**XIII**) können als Liganden an Metallen in asymmetrischen, Metall-katalysierten Reaktionen (wie z. B. der asymmetrischen Hydrierung, der Transfer-Hydrierungen, der asymmetrischen Umlagerung, der asymmetrischen Cyclopropanierung oder Heck-Reaktionen) sowie bei Polymerisationen eingesetzt werden. Sie sind insbesondere für asymmetrische Reaktionen gut geeignet.

Die Liganden der allgemeinen Formeln **(VII)** und **(XIII)** bilden Komplexverbindungen vom Typ **(XIV),**

[MₓPₘLₙS_{q}]Yᵣ **(XIV)**

wobei in der allgemeinen Formel **(XIV)** M ein Metallzentrum, bevorzugt ein Übergangsmetallzentrum, L gleiche oder verschiedene koordinierende organische oder anorganische Liganden und P organische Liganden, erfindungsgemäß Isophosphindoline vom Typ **(VII)** oder **(XIII)** darstellen, S koordinierende Lösungsmittelmoleküle und Y Äquivalente aus nicht koordinierenden Anionen repräsentiert, wobei x und m ganzen Zahlen größer oder gleich 1, n, q und r ganzen Zahlen größer oder gleich 0 sind.

Die Summe m + n + q wird durch die an den Metallzentren zur Verfügung stehenden Koordinationszentren nach oben begrenzt, wobei nicht alle Koordinationsstellen besetzt sein müssen. Bevorzugt sind Komplexverbindungen mit oktaedrischer, pseudo-oktaedrischer, tetraedrischer, pseudo-tetraedrischer, quadratisch-pianarer Koordinationssphäre, die auch verzerrt sein kann, um das jeweilige Übergangsmetallzentrum. Die Summe m + n + q ist in solchen Komplexverbindungen kleiner oder gleich 6x.

Die erfindungsgemäßen Komplexverbindungen enthalten mindestens ein Metallatom oder -ion, vorzugsweise ein Übergangsmetallatom oder -ion, insbesondere aus Palladium, Platin, Rhodium, Ruthenium, Osmium, Iridium, Kobalt, Nickel, oder/und Kupfer.

Bevorzugt sind Komplexverbindungen mit weniger als vier Metallzentren, besonders bevorzugt solche mit ein oder zwei Metallzentren. Die Metallzentren können dabei mit verschiedenen Metallatomen und -ionen besetzt sein.

Bevorzugte Liganden L solcher Komplexverbindungen sind Halogenid, besonders Cl, Br und I, Dien, besonders Cyclooctadien, Norbomadien, Olefin, besonders Ethylen und Cycloocten, Acetato, Trifluoracetato, Acetylacetonato, Allyl, Methallyl, Alkyl, besonders Methyl und Ethyl, Nitril, besonders Acetonitril und Benzonitril, sowie Carbonyl und Hydrido Liganden.

Bevorzugte koordinierende Lösungsmittel S sind Amine, besonders Triethylamin, Alkohole, besonders Methanol und Aromaten, besonders Benzol und Cumol.

Bevorzugte nichtkoordinierende Anionen Y sind Trifluoracetat, BF₄, ClO₄, PF₆ und BAr₄.

In den einzelnen Komplexverbindungen können dabei unterschiedliche Moleküle, Atome oder Ionen der einzelnen Bestandteile M, P, L, S und Y enthalten sein.

Bevorzugt unter den ionisch aufgebauten Komplexverbindungen sind Verbindungen des Typs [RhPₘ(Dien)]⁺Y⁻, wobei Pₘ entweder zwei Isophosphindoline von Typ **(VII)** oder ein Isophosphindolin von Typ **(XIII)** repräsentiert.

Die Herstellung dieser Metall-Ligand-Komplexverbindungen kann in situ durch Reaktion eines Metallsalzes oder eines entsprechenden Vorkomplexes mit den Liganden der allgemeinen Formel **(VII)** und **(XIII)** erfolgen. Darüber hinaus kann eine Metall-Ligand-Komplexverbindung durch Reaktion eines Metallsalzes oder eines entsprechenden Vorkomplexes mit den Liganden der allgemeinen Formel **(VII)** und **(XIII)** und anschließende Isolierung gewonnen werden.

Beispiele für die Metallsalze sind Metallchloride, -bromide, -iodide, -cyanide, -nitrate, -acetate, -acetylacetonate, -hexafluoracetylacetonate, -perfluoracetate oder -triflate, insbesondere des Palladium, Platins, Rhodium, Ruthenium, Osmium, Iridium, Kobalts, Nickels oder/und des Kupfers.

Beispiele für die Vorkomplexe sind :
Cyclooctadienpalladiumchlorid, Cyclooctadienpalladiumiodid, 1,5-Hexadienpalladiumchlorid, 1,5-Hexadienpalladiumiodid, Bis(dibenzylidenaceton)palladium, Bis(benzonitril)palladium(II)chlorid, Bis(benzonitril)palladium(II)bromid, Bis(benzonitril)palladium(II)iodid, Bis(allyl)palladium, Bis(methallyl)palladium, Allylpalladiumchlorid-Dimer, Methallylpalladiumchlorid-Dimer, Tetramethylethylendiaminpalladiumdichlorid, Tetramethylethylendiaminpalladiumdibromid, Tetramethylethylendiaminpalladiumdiiodid, Tetramethylethylendiaminpalladiumdimethyl, Cyclooctadienplatinchlorid, Cyclooctadienplatiniodid, 1,5-Hexadienplatinchlorid, 1,5-Hexadienplatiniodid, Bis(cyclooctadien)platin, Kalium(ethylentrichloroplatinat), Cyclooctadienrhodium(I)chlorid-Dimer, Norbomadienrhodium(I)chlorid-Dimer, 1,5-Hexadienrhodium(I)chlorid-Dimer, Tris(triphenylphosphan)rhodium(l)chlorid, Hydridocarbonyltris(triphenylphosphan)rhodium(I)chlorid, Bis(cyclooctadien)rhodium(I)perchlorat, Bis(cyclooctadien)rhodium(I)tetrafluorborat, Bis(cyclooctadien)rhodium(I)triflat, Bis(acetonitrilcyclooctadien)rhodium(I)perchlorat, Bis(acetonitrilcyclooctadien)rhodium(I)tetrafluorborat, Bis(acetonitrilcyclooctadien)rhodium(I)triflat, Cyclopentadienrhodium(III)chlorid-Dimer, Pentamethylcyclopentadienrhodium(III)chlorid-Dimer, (cyclooctadien)Ru(η³-allyl)₂, ((cyclooctadien)Ru)₂(acetat)₄, ((Cyclooctadien)Ru)₂(trifluoracetat)₄, RuCl₂(Aren)-Dimer, Tris(triphenylphosphan)ruthenium(II)chlorid, Cyclooctadienruthenium(II)chlorid, OsCl₂(Aren)-Dimer, Cyclooctadieniridium(I)chlorid-Dimer, Bis(cycloocten)iridium(I)chlorid-Dimer, Bis(cyclooctadien)nickel, (Cyclododecatrien)nickel, Tris(norbomen)nickel, Nickeltetracarbonyl, Nickel(II)acetylacetonat, (Aren)kupfertriflat, (Aren)kupferperchlorat, (Aren)kupfertrifluoracetat, Kobaltcarbonyl.

Die Komplexverbindungen auf Basis von ein oder mehreren Metallen der metallischen Elemente, insbesondere aus der Gruppe von Ru, Co, Rh, Ir, Ni, Pd, Pt, Cu können bereits Katalysatoren sein oder zur Herstellung von Katalysatoren auf Basis eines oder mehrerer Metalle der metallischen Elemente, insbesondere aus der Gruppe von Ru, Co, Rh, Ir, Ni, Pd, Pt, Cu verwendet werden. Alle diese Komplexverbindungen sind besonders geeignet in der asymmetrischen Hydrierung von C=C-, C=O- oder C=N-Bindungen, in denen sie hohe Aktivitäten und Selektivitäten aufweisen. Insbesondere erweist es sich hier als vorteilhaft, daß sich die Liganden der allgemeinen Formel (**XIII**) durch ihre einfache, breite Abwandelbarkeit sterisch und elektronisch sehr gut auf das jeweilige Substrat abstimmen lassen.

Entsprechende Katalysatoren enthalten mindestens eine der erfindungsgemäßen Komplexverbindungen.

### Beispiele :

### 1. 1,2-Bis-[α-hydroxyethyl]benzen:

Die Darstellung des 1,2-Bis-[α-hydroxyethyl]benzens erfolgte analog literaturbekannter Vorschriften: Goldschmidt et al. Chem. Ber. 1961, 94, 169.

### 2. Cylisches Sulfat :

Die Darstellung von cyclischem Sulfat wurde entsprechend der Methode von Burk (J. Am. Chem. Soc. 1993, 115, 10125) ausgehend vom 1,2-Bis-[α-hydroxyethyl]benzen durchgeführt.
Zu 31 mmol (5.1 g) 1,2-Bis-[α-hydroxyethyl]benzen, gelöst in 40 ml CCl₄ werden innerhalb von 30 min 38 mmol Thionylchlorid in 10 ml CCl₄ zugetropft. Nach 2,5 Stunden Kochen am Rückfluß und Abkühlen der Lösung wird bis fast zur Trockne eingeengt. Dann wird der Rückstand in CCl₄, Acetonitril, Wasser (25ml/25ml/35ml) aufgenommen und auf 0°C abgekühlt. In der Kälte werden dann nacheinander 0,20 mmol RuCl₃ ^{x} H₂O und 61 mmol NalO₄ zugegeben. Nach einer Reaktionszeit von einer Stunde wird mit 170 ml Wasser verdünnt, viermal mit je 100 ml Diethylether extrahiert und die vereinigten Etherextrakte zweimal mit je 60 ml ges. NaCI-Lösung gewaschen. Die Lösung wird über Nacht über Na₂SO₄ getrocknet und anschließend zu einem rotbraunen Sirup eingeengt. Die Säulenchromatographie mit Kieselgel 60 als stationärer und n-Hexan/Essigester 10:1 als mobiler Phase ergibt 1.0 g reines racemisches 1,2-Bis-[α-hydroxyethyl]benzen-cyclosulfat (14 % d. Th.).

Als zweite Methode wurde entsprechend Zhang WO 97/13763 gearbeitet. Die Ausbeute an reinem Bis-[α-hydroxyethyl]benzen-cyclosulfat betrug 25 %, die in der Literatur angegebenen ¹H-NMR-Daten konnten reproduziert werden.
¹H NMR (400,13 MHz, CDCl₃) : δ 1.92 (d, 6H, CH₃), 5.56 (q, 2H, CH), 7.35 (m, 2H, CHₐᵣ), 7.56 (m, 2H, CHₐᵣ) ppm;

### 3. Isophosphindolinsynthese

(modifizierte Methode nach Burk et al. J. Am. Chem. Soc. 1993, 115, 10125) 1,5 mmol Phenylphosphan werden in 35 ml kethylgetrocknetem THF gelöst und mit 0,94 ml 1,6 M n-BuLi-Lösung in n-Hexan versetzt. Nach zweistündigem Rühren bei Raumtemperatur wird diese Lösung bei -78°C zu einem Gemisch aus 1,5 mmol (340 mg) des cyclischen Sulfates und 20 ml THF getropft. Vier Stunden nach beendeter Zugabe werden nochmal 1,09 ml 1,6 M n-BuLi-Lösung in n-Hexan zugetropft. Die Reaktionslösung wird über Nacht langsam auf Raumtemperatur erwärmt, überschüssiges Lithiumorganyl mit 1 ml sauerstofffreiem Methanol hydrolysiert. Vollständiges Eindampfen der Lösung ergibt einen weißen Niederschlag, der zur Übersicht zunächst mittels ³¹P-NMR untersucht wurde. Dieses Rohprodukt enthält neben dem gewünschten Isophosphindolin viele Nebenprodukte.
³¹P NMR (161,99 MHz, CDCl₃) : δ+21.7 ppm.
GC/MS (70 eV) : *m*/*z* = 240 (100%, *M*⁺),225 (25%, *M*⁺-15), 212 (9%), 192 (5%), 178 (6%), 165 (3%), 147 (16%), 131 (17%), 129 (10%), 115 (14%), 109 (12%), 91 (27%), 77 (32%), 65 (2%), 51 (2%), 39 (2%);

### 4. Reinigung des Isophosphindolins durch Oxidation/Reduktion

Das Roh-Produkt des Isophosphindolins wird zur Reinigung und Enantiomerentrennung oxidiert.
Das Rohprodukt wird in THF gelöst und über Nacht bei 20°C unter Luftzutritt gerührt, die Lösung wird mit 20 ml gesättigter NH₄Cl-Lösung ausgeschüttelt, die wäßrige Phase dreimal mit je 20 ml Diethylether gewaschen und die vereinigten organischen Phasen nach Trocknung über wasserfreiem Natriumsulfat zur Trockne eingeengt. Das so erhaltene Rohprodukt enthält u. a. das 1,3-Dimethyl-2-phenyl-isophosphindolinoxid. Nach Waschen mit n-Hexan und anschließender getrennter Säulenchromatographie des Filtrats und des Filterrückstands (Kieselgel, 1. n-Hexan/Essigester 10:4, 2. MeOH) wird das Oxid in unterschiedlichen Fraktionen mit einer Reinheit zwischen 70 und 90% erhalten.

### Analysendaten :

MS (70 eV): *m*/*z* = 256 (100%, *M*⁺), 241 (5%, *M*⁺-15), 228 (5%), 200 (4%), 178 (4%), 165 (2%), 147 (1%), 132 (18%), 131 (19%), 129 (5%), 117 (58%), 115 (19%), 91 (14%), 77 (6%), 65 (2%), 51 (4%), 39 (2%);
¹H NMR (400,13 MHz, CDCl₃): δ 1.18 (dd J_{HH}: 7.1 Hz, J_{PH}: 16,7 Hz, 3H, CH₃), 1.55 (dd J_{HH}: 7.6 Hz, J_{PH}: 14.8 Hz, 3H, CH₃), 3.28, 3.30 (2 x m, 1H, CH), 3.54, 3.59 (2 x m, 1H, CH), 7.18-7.41 (m, 9H, CHₐᵣ) ppm.
³¹P NMR (161,99 MHz, C₆D₆): δ +60.4 ppm.

### Reduktion

0.2 mmol (52 mg) 1,3-Dimethyl-2-phenyl-isophosphindolinoxid werden ohne zusätzliches Lösungsmittel unter einer Argon-Schutzgasatmosphäre mit 0.13 mmol frisch destilliertem Phenylsilan zwei Stunden auf 90°C erhitzt. Nach dem Abkühlen des Reaktionsgemisches wird mit 3 x 2 ml absolutem sauerstoffreiem Diethylether extrahiert und filtriert. Das Filtrat wird eingeengt und das 1,3-Dimethyl-2-phenyl-isophosphindolin in ca. 80 %iger Reinheit isoliert. Nicht abgetrennt werden konnten bisher nicht identifizierte nichtphosphorhaltige Nebenprodukte.
¹H NMR (400,13 MHz, C₆D₆): δ 1.14 (dd J_{HH}: 7.3 Hz, J_{PH}: 11.2 Hz, 3H, CH₃), 1.49 (dd J_{HH}: 7.7 Hz, J_{PH}: 14.8 Hz, 3H, CH₃), 3.34, 3.40 (2 x m, 1H, CH), 3.50, 3.62 (2 x m, 1H, CH), 6.72....7.39 (m, 9H, CHₐᵣ) ppm;
³¹P NMR (161,99 MHz, CDCl₃) : δ+21.5 ppm.

### 5. Racematspaltung des 1,3-Dimethyl-2-phenyl-isophosphindolin-2-oxid

Die analytische Trennung einer ethanolischen Lösung des Racemates des 1,3-Dimethyl-2-phenyl-isophosphindolin-2-oxids gelingt per HPLC (CHIRALCEL OD-H, n-Hexan/EtOH 97:3, Flußrate: 0,8 ml/min). Die Retentionszeiten betragen 13.5 min und 20.0 min.
Zur präparativen Trennung der Enantiomeren des Isophosphindolinoxides und zur Abtrennung der Nebenprodukte wurden unter Vorschaltung einer Kieselgelvorsäule eine Vielfachinjektion auf der oben beschriebenen analytischen HPLC-Säule und Vereinigung von insgesamt je 75 Fraktionen der beiden Enantiomere 5,3 mg des zuerst eluierenden Enantiomers und 6,2 mg des als zweites eluierenden enantiomerenreinen Isophosphindolinoxides aufgefangen. Der Drehwert der beiden Enantiomere konnte nicht genau bestimmt werden.

### Komplexverbindungen des 1,3-Dimethyl-2-phenyl-isophosphindolins

### 6. cis-Bis[1,3-Dimethyl-2-phenyl-isophosphindolin]dichloropalladium

0,07 mmol (17 mg) 1,3-Dimethyl-2-phenyl-isophosphindolin, gelöst in 0,3 ml absolutem THF und 0,035 mmol [PdCl₂(PhCN)₂], gelöst in 0,6 ml absolutem THF werden unter einer Argon-Schutzgasatmosphäre zusammengegeben, kurz gerührt und nach Filtration über eine mit Kieselgel gefüllte Pasteurpipette vollständig eingeengt. Der orangefarbene Rückstand wird analysiert. Es handelt sich um den cis-Komplex der Formel PdCl₂(Isophosphindolin)₂

### Analysendaten:

MS (Elektronenstoßionisation (70eV)) : m/z = 586 (2%, PdP₂⁺), 584 (2%, PdP₂-2H⁺), 317 (3%), 240 (100%, *M*⁺), 225 (28%, *M*⁺-15), 212 (3%), 192 (10%), 178 (14%), 165 (7%), 147 (24%), 131 (34%), 129 (10%), 115 (46%), 109 (12%), 91 (59%), 77 (32%), 65 (2%), 51 (2%), 39 (2%)
³¹P NMR (161,99 MHz, C₆D₆-THF) : δ +74.04 ppm.

### 7. [cis-Bis(1,3-Dimethyl-2-phenyl-isophosphindolin)cyclooctadienrhodium] etrafluoroborat

0,05 mmol [Rh(COD)₂]BF₄ werden in 1,5 ml THF aufgeschlemmt, dazu unter Argon-Schutzgasatmosphäre 0,1 mmol (24 mg) 1,3-Dimethyl-2-phenylisophosphindolin, gelöst in 0,1 ml C₆D₆, zugegeben. Nach etwa einstündigem Stehen bei Raumtemperatur löst sich der Rhodium-COD-Komplex unter Bildung des Phospholankomplexes auf. Die Verbindung liegt als schnell austauschendes Diastereomerengemisch der Formeln Rh(COD)(R-Isophos)(S-Isophos) und Rh(COD)(R-Isophos)(R-Isophos) bzw. Rh(COD)(S-lsophos)(S-Isophos) vor.
³¹P NMR (161,99 MHz, C₆D₆): δ +62,3 ppm (breites Signal).

### 8. (1,3-Dimethyl-2-phenyl-isophosphindolin)cyclooctadienchlororhodium

0,025 mmol [Rh(COD)Cl]₂ werden in 1,0 ml THF aufgeschlemmt, dazu unter Argon-Schutzgasatmosphäre 0,05 mmol (12 mg) 1,3-Dimethyl-2-phenylisophosphindolin, gelöst in 0,1 ml C₆D₆, zugegeben. Nach etwa 30 min Rühren bei Raumtemperatur löst sich der Rhodium-COD-Cl-Komplex unter Bildung des Isophosphindolinkomplexes auf.
³¹P NMR (161,99 MHz, C₆D₆): δ +61,8 ppm (d, J_{PRh} = 154 Hz).

## Patentansprüche

1. Komplexverbindungen der allgemeinen Formel **(XIV)**
[MₓPₘLₙS_{q}]Yᵣ **(XIV)**
wobei
M ein Metallzentrum,
P organische Liganden,
L gleiche oder verschiedene organische oder anorganische Liganden,
S koordinierende Lösemittelmoleküle und
Y nichtkoordinierende anionische Äquivalente
darstellen und worin x und m ganze Zahlen größer oder gleich 1, n, q und r ganze Zahlen größer oder gleich 0 sind **dadurch gekennzeichnet, daß** die Komplexverbindung ein oder mehrere gleiche oder verschiedene Isophosphindoline vom Typ (**VII**) oder (**XIII**) 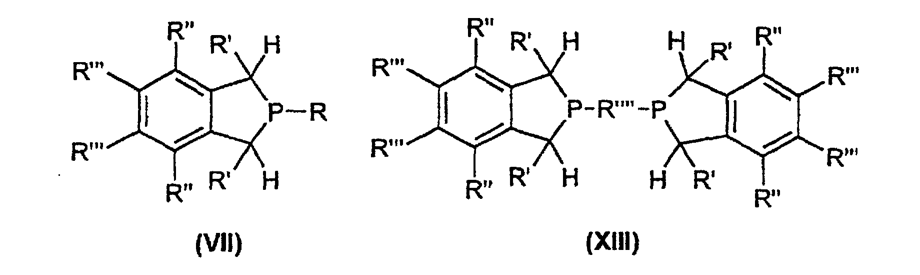 als Liganden P enthält, wobei in der allgemeinen Formel (**VII**)
R für Wasserstoff, Alkyl-, Aryl-, Haloaryl-, Haloalkylgruppen,
R' für Alkyl-, Aryl-, Haloaryl-, Haloalkylgruppen,
R" und R"' unabhängig voneinander für Wasserstoff, Alkyl-, Aryl, Haloalkyl- oder Haloaryl-, Alkoxy-, Amino-, Dialkylamino-, Sulfonatgruppen oder Fluor steht und wobei zwei benachbarte R"/R", R"/R"' oder R"'/R"' auch verbrückt sein können,
oder wobei in der allgemeinen Formel (**XIII**)
R' für Alkyl-, Aryl-, Haloaryl-, Haloalkylgruppen,
R" und R"' unabhängig voneinander für Wasserstoff, Alkyl-, Aryl-, Haloalkyl- oder Haloaryl-, Alkoxy-, Amino-, Dialkylamino-, Sulfonatgruppen oder Fluor steht und zwei benachbarte R"/R", R"/R"' oder R"'/R"' auch verbrückt sein können
und worin R"" für eine Alkandiyl-, Arendiyl- oder Heteroarendiylgruppe steht, wobei der Begriff Alkyl- bzw. Haloalkylgruppe die entsprechenden Cycloverbindungen einschließt.

2. Komplexverbindungen gemäß Anspruch 1 **dadurch gekennzeichnet, daß** die Summe m + n + q kleiner oder gleich 6x ist.

3. Komplexverbindungen gemäß Anspruch 1 oder 2 **dadurch gekennzeichnet, daß** weniger als vier Metallzentren, bevorzugt ein oder zwei Metallzentren enthalten sind.

4. Komplexverbindungen gemäß einem der vorherigen Ansprüche **dadurch gekennzeichnet, daß** das Metallzentrum oder die Metallzentren Mₓ mindestens ein Übergangsmetall, insbesondere Palladium, Platin, Rhodium, Ruthenium, Osmium, Iridium, Kobalt, Nickel, oder/und Kupfer enthalten.

5. Komplexverbindungen gemäß einem der vorherigen Ansprüche, **dadurch gekennzeichnet, daß** die Alkyl-, Aryl-, Haloalkyl-, Haloalkyl-, Alkoxy- oder/und Dialkylaminogruppen unabhängig voneinander jeweils 1 bis 20, vorzugsweise 1 bis 6 Kohlenstoffatome, aufweisen.

6. Komplexverbindungen gemäß einem der vorherigen Ansprüche, **dadurch gekennzeichnet, daß** die Haloalkyl- oder/und Haloarylgruppen CF₃, CH₂CF₃, C₂F₅ darstellen.

7. Komplexverbindungen nach einem der vorherigen Ansprüche, **dadurch gekennzeichnet, daß** die Alkandiyl-, Arendiyl- oder Heteroarendiylgruppe R"" 2 bis 20 Kohlenstoffatome, vorzugsweise 2, 3, 4, 5 oder 6 Kohlenstoffatome, insbesondere 2 oder 6 Kohlenstoffatome, aufweist.

8. Komplexverbindungen nach einem der vorherigen Ansprüche, **dadurch gekennzeichnet, daß** die Alkandiyl-, Arendiyl- oder Heteroarendiylgruppe R"" Ethan-1,2-diyl, Benzo-1,2-diyl oder Furan-3,4-diyl darstellt.

9. Komplexverbindungen nach einem der vorherigen Ansprüche, **dadurch gekennzeichnet, daß** R Phenyl, R' Methyl oder Ethyl, R" und R"' Wasserstoff, Methyl oderlund Phenylen, R"" Benzo-1,2-diyl ist.

10. Komplexverbindungen nach einem der vorherigen Ansprüche, **dadurch gekennzeichnet, daß** es chirale Liganden P enthält.

11. Komplexverbindungen nach einem der vorherigen Ansprüche, **dadurch gekennzeichnet, daß** ein Ligand P ein Isophosphindolin gemäß Formel (VII) ist, das zwei stereogene Zentren in den Positionen 1 und 3 mit gleichen absoluten Konfigurationen aufweist.

12. Komplexverbindungen nach einem der Ansprüche 1 bis 11, **dadurch gekennzeichnet, daß** ein Ligand P ein Isophosphindolin gemäß Formel (XIII) ist, das drei oder vier stereogene Zentren in den Positionen 1, 1', 3 und 3' mit gleichen absoluten Konfigurationen aufweist.

13. Komplexverbindungen nach einem der vorherigen Ansprüche, **dadurch gekennzeichnet, daß** R Phenyl, R' Methyl, R" und R"' Wasserstoff und R"" Benzo-1,2-diyl ist.

14. Komplexverbindungen nach einem der vorherigen Ansprüche, **dadurch gekennzeichnet, daß** ein Enantiomer angereichert ist.

15. Verwendung einer Komplexverbindung nach einem der Ansprüchen 1 bis 15 als Katalysator für asymmetrische Reaktionen oder Polymerisationen, insbesondere für asymmetrische Hydrierungen, Transfer-Hydrierungen, Umlagerungen, Cyclopropanierungen, Heck-Reaktionen.

## Claims

1. A complex of the formula (XIV)
[MₓPₘLₙS_{q}]Yᵣ (XIV)
where
M is a metal center,
P are organic ligands,
L are identical or different organic or inorganic ligands,
S are coordinating solvent molecules and
Y are noncoordinating anionic equivalents
and x and m are integers greater than or equal to 1, n, q and r are integers greater than or equal to 0, in which one or more identical or different isophosphindolines of the type (VII) or (XIII) 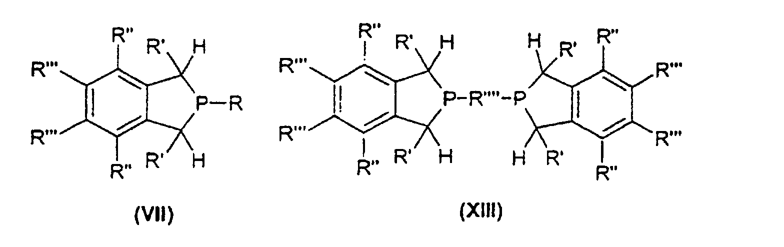 where, in the formula (VII),
R is hydrogen or an alkyl, aryl, haloaryl or haloalkyl group,
R' are alkyl, aryl, haloaryl or haloalkyl groups,
R" and R"' are each, independently of one another, hydrogen, alkyl, aryl, haloalkyl or haloaryl, alkoxy, amino, dialkylamino or sulfonate groups or fluorine and two adjacent radicals R"/R", R"/R"' or R"'/R"' may also be bridged,
and, in the formula (XIII)
R' are alkyl, aryl, haloaryl or haloalkyl groups,
R" and R"' are each, independently of one another, hydrogen, alkyl, aryl, haloalkyl or haloaryl, alkoxy, amino, dialkylamino or sulfonate groups or fluorine and two adjacent radicals R"/R", R"/R"' or R"'/R"' may also be bridged, and
R"" is an alkanediyl, arenediyl or heteroarenediyl group, where the term alkyl or haloalkyl group encompasses the corresponding cyclo compounds,
are present as ligands P.

2. A complex as claimed in claim 1, wherein the sum m + n + q is less than or equal to 6x.

3. A complex as claimed in claim 1 or 2 in which less than four metal centers, preferably one or two metal centers, are present.

4. A complex as claimed in any of the preceding claims, wherein the metal center or centers Mₓ comprise at least one transition metal, in particular palladium, platinum, rhodium, ruthenium, osmium, iridium, cobalt, nickel or/and copper.

5. A complex as claimed in any of the preceding claims, wherein the alkyl, aryl, haloalkyl, haloalkyl, alkoxy or/and dialkylamino groups each have, independently of one another, from 1 to 20, preferably from 1 to 6, carbon atoms.

6. A complex as claimed in any of the preceding claims, wherein the haloalkyl or/and haloaryl groups are CF₃, CH₂CF₃, C₂F₅.

7. A complex as claimed in any of the preceding claims, wherein the alkanediyl, arenediyl or heteroarenediyl group R"" has from 2 to 20 carbon atoms, preferably 2, 3, 4, 5 or 6 carbon atoms, in particular 2 or 6 carbon atoms.

8. A complex as claimed in any of the preceding claims, wherein the alkanediyl, arenediyl or heteroarenediyl group R"" is ethane-1,2-diyl, benzene-1,2-diyl or furan-3,4-diyl.

9. A complex as claimed in any of the preceding claims, wherein R is phenyl, R' is methyl or ethyl, R" and R"' are hydrogen, methyl or/and phenylene, R"" is benzene-1,2-diyl.

10. A complex as claimed in any of the preceding claims in which chiral ligands P are present.

11. A complex as claimed in any of the preceding claims, wherein a ligand P is an isophosphindoline of the formula (VII) which has two asymmetric centers having the same absolute configuration in positions 1 and 3.

12. A complex as claimed in any of claims 1 to 11, wherein a ligand P is an isophosphindoline of the formula (XIII) which has three or four asymmetric centers having the same absolute configuration in positions 1, 1', 3 and 3'.

13. A complex as claimed in any of the preceding claims, wherein R is phenyl, R' is methyl, R" and R"' are hydrogen and R"" is benzene-1,2-diyl.

14. A complex as claimed in any of the preceding claims which is enriched in one enantiomer.

15. The use of a complex as claimed in any of claims 1 to 15 as catalyst for asymmetric reactions or polymerizations, in particular for asymmetric hydrogenations, transfer hydrogenations, rearrangements, cyclopropanations, Heck reactions.

## Revendications

1. Composés complexes de formule générale (XIV)
[MₓPₘLₙS_{q}]Yᵣ (XIV)
où
M représente un centre métallique
P représente des ligands organiques
L représente des ligands organiques et inorganiques, identiques ou différents,
S représente une molécule de solvant de coordination et
Y représente des équivalents anioniques non coordinants
et où x et m sont des entiers supérieurs ou égaux à 1, n, q et r sont des entiers supérieurs ou égaux à 0, **caractérisés en ce que** les composés complexes comprennent une ou plusieurs isophosphindolines de type (VII) ou (XIII) 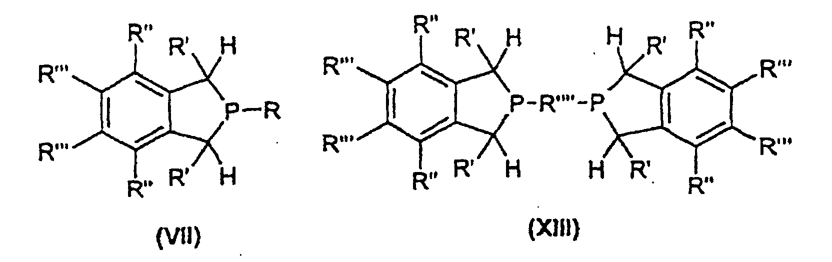 en tant que ligand P,
où dans la formule générale (VII)
R représente un atome d'hydrogène, des groupes alkyle, aryle, haloaryle, haloalkyle,
R' représente des groupes alkyle, aryle, haloaryle, haloalkyle,
R" et R"' représentent, indépendamment l'un de l'autre, un atome d'hydrogène, des groupes alkyle, aryle, haloalkyle ou haloaryle, alkoxy, amino, dialkylamino, sulfonato ou fluor, et où deux groupes adjacents R"/R", R"/R"' ou R"'/R"' peuvent également être pontés,
ou dans la formule générale (XIII)
R' représente des groupes alkyle, aryle, haloaryle, haloalkyle,
R" et R"' représentent, indépendamment l'un de l'autre, un atome d'hydrogène, des groupes alkyle, aryle, haloalkyle ou haloaryle, alkoxy, amino, dialkylamino, sulfonato ou fluor, et deux groupes adjacents R"/R", R"/R"' ou R"'/R"' peuvent également être pontés, et où
R"" représente un groupe alcanediyle, arènediyle ou hétéroarènediyle, le vocable groupe alkyle ou haloalkyle comprenant les composés cycliques correspondants.

2. Composés complexes selon la revendication 1, **caractérisés en ce que** la somme de m + n + q est inférieure ou égale à 6x.

3. Composés complexes selon la revendication 1 ou 2, **caractérisés en ce que** moins de 4 centres métalliques, de préférence un ou deux centres métalliques, sont présents.

4. Composés complexes selon l'une des revendications précédentes, **caractérisés en ce que** le centre métallique ou les centres métalliques Mₓ contiennent au moins un métal de transition, en particulier le palladium, le platine, le rhodium, le ruthénium, l'osmium, l'iridium, le cobalt, le nickel et/ou le cuivre.

5. Composés complexes selon l'une des revendications précédentes, **caractérisés en ce que** les groupes alkyle, aryle, haloalkyle, haloaryle, alkoxy ou/et dialkylamino présentent chacun, indépendamment l'un de l'autre, 1 à 20, de préférence 1 à 6 atomes de carbone.

6. Composés complexes selon l'une des revendications précédentes, **caractérisés en ce que** les groupes haloalkyle ou/et haloaryle représentent des groupes de formules CF₃, CH₂CF₃, C₂F₅.

7. Composés complexes selon l'une des revendications précédentes, **caractérisés en ce que** le groupe alcanediyle, arènediyle ou hétérorènediyle R"" présente 2 à 20 atomes de carbone, de préférence 2, 3, 4, 5 ou 6 atomes de carbone, en particulier 2 ou 6 atomes de carbone.

8. Composés complexes selon l'une des revendications précédentes, **caractérisés en ce que** le groupe alcanediyle, arènediyle ou hétérorènediyle R"" représente les groupes éthane-1,2-diyle, benzo-1,2-diyle ou furanne-3,4-diyle.

9. Composés complexes selon l'une des revendications précédentes, **caractérisés en ce que** R représente un groupe phényle, R' représente un groupe méthyle ou éthyle, R" et R"' représente un atome d'hydrogène, un groupe méthyle ou/et phénylène, R"" représente un groupe benzo-1,2-diyle.

10. Composés complexes selon l'une des revendications précédentes **caractérisés en ce qu'**ils contiennent P en tant que ligand chiral.

11. Composés complexes selon l'une des revendications précédentes **caractérisés en ce qu'**un ligand P est une isophosphindoline selon la formule (VII), qui présente deux centres stéréogènes en positions 1 et 3 avec des configurations absolues.

12. Composés complexes selon l'une des revendications 1 à 11, **caractérisés en ce qu'**un ligand P est une isophosphindoline de formule (XIII), qui présente trois ou quatre centres stéréogènes en positions 1, 1', 3 et 3' avec des configurations absolues identiques.

13. Composés complexes selon l'une des revendications précédentes **caractérisés en ce que** R représente un groupe phényle, R' représente un groupe méthyle, R" et R"' représentent un atome d'hydrogène et R"" représente un groupe benzo-1,2-diyle.

14. Composés complexes selon l'une des revendications précédentes, **caractérisés en ce qu'**un enantiomère est enrichi.

15. Composés complexes selon l'une des revendications 1 à 15 en tant que catalyseur pour des réactions asymétriques ou des polymérisations, en particulier pour des hydrogénations asymétriques, hydrogénation de transfert, réarrangements asymétriques, cyclopropanations asymétriques, de réactions de Heck.
